# EUROPÄISCHE PATENTSCHRIFT

(11) **EP 3 374 783 B1**
(45) Veröffentlichungstag und Bekanntmachung des Hinweises auf die Patenterteilung: **15.06.2022**
(21) Anmeldenummer: 16788485.7
(22) Anmeldetag: 24.10.2016
(51) Int. Cl.: G01S 5/02, G01S 1/04

(54) **BELEUCHTUNGSEINRICHTUNG MIT GERICHTETEM FUNKSIGNAL ZUR POSITIONSIDENTIFIKATION**
LIGHTING DEVICE HAVING A DIRECTED RADIO SIGNAL FOR POSITION IDENTIFICATION
DISPOSITIF D'ÉCLAIRAGE AVEC SIGNAL RADIOÉLECTRIQUE DIRIGÉ AUX FINS D'IDENTIFICATION DE POSITION

(30) Priorität: 13.11.2015 DE 102015119626
(43) Veröffentlichungstag der Anmeldung: 19.09.2018
(73) Patentinhaber: OSRAM GmbH, 80807 München (DE)
(72) Erfinder: PEITZ, Christoph, 59556 Lippstadt (DE)
(74) Vertreter: Hofstetter, Schurack & Partner
(86) Internationale Anmeldenummer: PCT/EP2016/075575
(87) Internationale Veröffentlichungsnummer: WO 2017/080805

(56) Entgegenhaltungen:
- EP-A1- 2 902 795
- WO-A1-2010/064159
- US-A1- 2012 194 383
- US-A1- 2015 002 292

## Beschreibung

Die Erfindung betrifft eine Beleuchtungseinrichtung zur Bereitstellung eines Positionsidentifikationssignals gemäß dem Oberbegriff des Patentanspruchs 1. Weiterhin betrifft die Erfindung eine Beleuchtungsanlage zur Bereitstellung von Positionsbestimmungsdaten mit einer Vielzahl von derartigen Beleuchtungseinrichtungen. Überdies betrifft die Erfindung ein Verfahren gemäß dem Oberbegriff des Patentanspruchs 13.

Bekannte Systeme zur Bereitstellung von

Positionsidentifikationssignalen können auf einer Beleuchtungsanlage basieren, welche in einem vorgegebenen Areal installiert ist. Innerhalb dieses Areals haben Menschen und Geräte gegebenenfalls die Herausforderung, sich zu orientieren, zu navigieren und Zugang zu weiteren lokalen digitalen Diensten zu finden und zu nutzen, beispielsweise mittels einer Anwendungssoftware (App) oder App-Funktionen, "Google Maps", "Lightify"-Lichtsteuerungen. Solche Geräte können zum Beispiel Smartphones, Tablet PCs oder Smartwatches sein. Üblicherweise ist das Layout des Areals in digitaler Form gespeichert und abrufbar, beispielsweise auf einem über das Internet zugänglichen Server oder in einer Cloud oder auf einem anderen mobilen oder lokalen Speicher, auf den das Gerät zugreifen kann. Somit wird die Beleuchtungsinstallation in einem Areal zu einem Orientierungssystem. Dadurch wird eine Selbstortung des Geräts ermöglicht. Auf dieser Grundlage können nun Dienste realisiert werden wie beispielsweise Navigation oder die Bereitstellung von ortsspezifischen Informationen.

In diesem Zusammenhang ist aus der WO 2015/116744 A1 ein System bekannt umfassend eine Leuchtenstreuscheibe einschließlich einer Oberfläche, die ein codiertes

Positionsdatenmuster aufweist, ein mobiles Kommunikationsgerät einschließlich einer Kamera und einer Bildschirmanzeige, einen Datenspeicher, welcher Datensätze umfasst, die einen Grundriss eines Gebäudes oder einer Anordnung repräsentiert, wobei sich das mobile Kommunikationsgerät in einer Datenkommunikation mit dem Datenspeicher befindet, sowie einer Applikation des mobilen Kommunikationsgeräts, wobei die Applikation dazu ausgelegt ist, das codierte Positionsdatenmuster zu decodieren und die decodierten Positionsdaten auf dem Grundriss zu lokalisieren, wobei die decodierten Positionsdaten auf der Bildschirmanzeige dargestellt werden.

Für eine Auswertung derartiger optisch codierter Positionsdaten sind jedoch eine Sichtverbindung des mobilen Kommunikationsgeräts mit der jeweiligen Leuchte und insbesondere eine Ausrichtung des Geräts innerhalb vorgegebener Grenzen notwendig.

Die EP 2 902 795 A1 offenbart ein Positionsinformationsübertragungssystem, welches eine Vielzahl von Positionsinformationsübertragungseinheiten beinhaltet. Die Positionsinformationsübertragungseinheit beinhaltet eine drahtlose Nahbereichskommunikationseinheit, die eine drahtlose Nahbereichskommunikation durchführt, und eine Schallwellenübertragungseinheit, die Positionsinformationen als Schallsignal sendet, das zum Erfassen einer Position eines Empfängers verwendet wird, der das Schallsignal basierend auf Informationen empfängt, die von der drahtlosen Nahbereichskommunikationseinheit übertragen werden.

Die US 2015/002292 A1 offenbart ein Erhalten eines Zielortes eines Benutzers, der mit einer körpergetragenen Vorrichtung verbunden ist, die Informationen über einen Zustand des Benutzers empfängt und eine Anzeige über den Zustand an einen Server über ein Netzwerk übermittelt. Das Verfahren beinhaltet ein Bereitstellen eines Netzwerks, das aus einer Vielzahl von Beleuchtungseinheiten und einer Datenbank gebildet ist, um Informationen aufrechtzuerhalten, die einen geografischen Standort jeder der Vielzahl von Beleuchtungseinheiten beschreiben, wobei jede Beleuchtungseinheit einen eindeutigen Identifikator sendet. Ferner beinhaltet das Verfahren Bereitstellen der am Körper getragenen Vorrichtung mit einem Sensor zur Identifizierung der Beleuchtungseinheit, wobei der Sensor Beleuchtungseinheiten-Identifikatoren von mindestens einer der Vielzahl von Beleuchtungseinheiten empfängt. Des Weiteren umfasst das Verfahren die am Körper getragene Vorrichtung die empfangenen Beleuchtungseinheiten-Identifikatoren mit der Anzeige in einer Nachricht an den Server über das Netzwerk kommuniziert und die Datenbank eine geografische Position der einen oder mehreren Beleuchtungseinheiten bereitstellt, wobei die geografische Position der Zielposition der körperverschleißenden Vorrichtung entspricht.

Die WO 2010/064159 A1 bezieht sich auf ein System und Verfahren zur Lokalisierungspositionierung in Beleuchtungsanlagen. Mindestens zwei von einer Zeitdifferenz der Ankunft (TDOA), des Ankunftswinkels (AOA), des empfangenen Signalstärkeindex (RSSI) und eines Positionsschätzalgorithmus mit vereinheitlichtem TDOA und RSSI werden verwendet, um die Lokalisierungspositionierung zu erhalten. Die Schemata führen eine Maximum-Likelihood-Schätzstrategie ein, die eine partielle Ableitungsmatrix für jede Beleuchtungseinheit mit mindestens zwei Referenzknoten beinhaltet, um eine höhere Genauigkeit zu erreichen.

Es ist daher Aufgabe der vorliegenden Erfindung, eine Beleuchtungseinrichtung, eine Beleuchtungsanlage sowie ein Verfahren bereitzustellen, welche bei hoher Ortungsgenauigkeit vielfältiger einsetzbar sind.

Diese Aufgabe wird gelöst durch eine Beleuchtungseinrichtung mit den Merkmalen des Patentanspruchs 1, eine Beleuchtungsanlage mit den Merkmalen des Patentanspruchs 11 sowie durch ein Verfahren mit den Merkmalen des Patentanspruchs 13 . Vorteilhafte Weiterbildungen der vorliegenden Erfindung sind Gegenstand der abhängigen Ansprüche.

Die Erfindung geht aus von einer Beleuchtungseinrichtung zur Bereitstellung eines Positionsidentifikationssignals, wobei die Beleuchtungseinrichtung ein Leuchtmittel umfasst. Bei der Beleuchtungseinrichtung handelt es sich beispielsweise um eine Leuchte, insbesondere um eine Deckenleuchte, welche zur Montage an einer Decke eines Raums ausgelegt ist. Das Leuchtmittel kann als Leuchtdioden(LED)-Modul (engl.: light emitting diode) ausgebildet sein. Ebenso kann das Leuchtmittel in Form einer Niederdruckentladungslampe (Leuchtstofflampe) vorliegen.

Der Erfindung liegt die Erkenntnis zugrunde, dass eine Bereitstellung von sehr genauen Positionsidentifikationssignalen auch über Sendeeinheiten in Form sogenannter (Funk-)Baken (Beacons) erreicht werden kann, wenn die Sendeeinheiten in dem betreffenden Areal möglichst homogen verteilt sind. Idealerweise beträgt ein Abstand zwischen den einzelnen Sendeeinheiten circa 1 bis 5 Meter. Dies ist allerdings in vielen Bereichen nicht einfach realisierbar, da die Sendeeinheiten einen Ort zu ihrer Befestigung benötigen, wobei diese der Einfachheit halber oftmals an Regale geklebt werden. Dort sind sie jedoch gerade im Fall eines öffentlich zugänglichen Bereichs dem Risiko einer mutwilligen Beschädigung oder Entwendung ausgesetzt. Da die Sendeeinheiten oftmals an den Stellen befestigt werden, wo sich eine Befestigungsmöglichkeit ergibt, ist eine Homogenität der Verteilung nicht zwangsläufig gegeben, vielmehr wird regelmäßig eine inhomogene Verteilung erzielt. Bei einer inhomogenen Verteilung jedoch wird eine Ortung ungenauer und es werden insgesamt mehr Sendeeinheiten benötigt. Eine ausgewogene Verteilung der Sendeeinheiten lässt sich jedoch dadurch erreichen, dass die Sendeeinheit mit einer Beleuchtungseinrichtung konstruktiv kombiniert wird. Auf diese Weise kann eine Infrastruktur geschaffen werden, die sowohl eine Beleuchtung des betreffenden Areals als auch die Bereitstellung eines Positionsidentifikationssignals ermöglicht.

Der Erfindung liegt die weitere Erkenntnis zugrunde, dass handelsübliche Sendeeinheiten zur Bereitstellung von Positionsidentifikationssignalen, beispielsweise BLE-Beacons (Bluetooth Low Energy) vereinfacht betrachtet ein sich kugelförmig ausbreitendes Signal aussenden. Dies kann insofern problematisch sein, da somit das Signal unkontrolliert von Gegenständen wie beispielsweise Regalen beeinflusst wird und somit eine Ortung gestört werden kann. Die Signalstärke nimmt umgekehrt proportional mit der Distanz ab. Dieser Effekt kann dazu genutzt werden, über die Senderstärke die Distanz zu der Sendeeinheit zu bestimmen, woraus später eine genaue Position ermittelt werden kann. Es kann jedoch gerade in Gängen durchaus gewünscht sein, dass das Signal nicht eine kreis- beziehungsweise kugelförmige Ausbreitungscharakteristik zeigt, sondern eine ellipsenförmige, also entlang einer Achse eine schnellere Abnahme der Signalstärke zeigt als in einer dazu orthogonalen Achse.

Erfindungsgemäß wird daher die Beleuchtungseinrichtung weitergebildet durch eine ein Antennenelement umfassende Sendeeinheit, wobei die Sendeeinheit dazu ausgelegt ist, bei einem bestimmungsgemäßen Betrieb das Positionsidentifikationssignal in Form eines gerichteten Funksignals mit einer vorgebbaren Abstrahlcharakteristik zu senden, wobei das Positionsidentifikationssignal Positionsbestimmungsdaten betreffend eine Position der Sendeeinheit und/oder des Leuchtmittels umfasst. Durch eine gerichtete Abstrahlung des Funksignals kann somit der Vorteil erzielt werden, dass ein störender Einfluss durch die Umgebung, in der die Sendeeinheit installiert ist, reduziert wird und somit eine höhere Genauigkeit einer Positionsbestimmung ermöglicht wird. Dadurch werden bei hoher Ortungsgenauigkeit vielfältigere Einsatzmöglichkeiten eröffnet. Bevorzugt kann vorgesehen sein, dass die vorgebbare Abstrahlcharakteristik während des bestimmungsgemäßen Betriebs veränderbar ist. Eine derartige Veränderbarkeit der Abstrahlcharakteristik kann beispielsweise durch eine manuelle Verstellung erfolgen. Ebenso kann vorgesehen sein, dass die Abstrahlcharakteristik über eine mechanische und/oder elektrische Verstellvorrichtung veränderbar ist.

Erfindungsgemäß weist die Beleuchtungseinrichtung ein Lichtlenkungselement auf, welches dazu ausgelegt ist, jeweils den überwiegenden Teil sowohl des abgestrahlten Positionsidentifikationssignals als auch des von dem Leuchtmittel abgestrahlten Lichts zu lenken. Mit anderen Worten ergibt sich dadurch in vorteilhafter Weise im Wesentlichen eine Überlappung von Lichtkegel und Funksignalfeld. Das Lichtlenkungselement kann insbesondere als optischer Reflektor ausgebildet sein, wobei der Reflektor bevorzugt aus Metall gebildet ist und/oder eine metallische Beschichtung aufweist. Dadurch kann die Abstrahlcharakteristik dahingehend verändert werden, dass ein Bereich des abgestrahlten Funksignals eingeschränkt beziehungsweise ausgerichtet wird, indem die Sendeeinheit in einer entsprechenden Anordnung zu dem Reflektor platziert wird. Damit können gleichzeitig optische Elemente genutzt werden, um die Ausbreitung des Funksignalfelds anzupassen, beispielsweise auf eine ähnliche Ausbreitung wie der optische Pfad des Lichts (Lichtkegel). Je weiter die Anordnung der Sendeeinheit aus einem Fokus des Lichtlenkungselements beziehungsweise dem Abstrahlort der Lichtquelle, also beispielsweise der LED, verschoben wird, umso mehr verschiebt sich das Funksignalfeld, was ein beabsichtigter Effekt sein kann. So kann beispielsweise auch vorgesehen sein, die Sendeeinheit an einer Seite eines Lichtlenkungselements anzuordnen, um somit eine einseitige Abstrahlung des Funksignals zu erzielen und eine Ausbreitung des Funksignals in der entgegengesetzten Richtung, die durch das Lichtlenkungselement abgeschirmt wird, zu verhindern.

Ferner ist die Sendeeinheit an der Beleuchtungseinrichtung verschiebbar gelagert angeordnet. Mittels einer Justiervorrichtung, mit der die Sendeeinheit verschoben werden kann, ist somit eine individuelle Einstellung der Abstrahlcharakteristik zur Erzeugung eines gewünschten Funksignalfelds möglich.

In einer vorteilhaften Weiterbildung ist die Beleuchtungseinrichtung zur Deckenmontage ausgebildet, wobei die Sendeeinheit insgesamt oder zumindest das für die Abstrahlung des Positionsidentifikationssignals wirksame Antennenelement in einer bestimmungsgemäßen Einbaulage an unterster Stelle angeordnet ist. Die bestimmungsgemäße Einbaulage der Beleuchtungseinrichtung ist dabei so definiert, dass die Beleuchtungseinrichtung bei einer Montage an einer Decke eines Raums den überwiegenden Teil des erzeugten Lichtstroms in Richtung auf den Boden des Raumes lenkt. In dieser Einbaulage zeigt somit auch die Sendeeinheit in Richtung des Bodens. Die Abstrahlcharakteristik der Sendeeinheit kann somit über die Anordnung der Sendeeinheit an der Beleuchtungseinrichtung beeinflusst werden. Dadurch kann das Funksignal beispielsweise in Verbindung mit einem Metallgehäuse der Beleuchtungseinrichtung in eine vorgebbare Richtung gelenkt werden, insbesondere direkt nach unten.

In einer weiteren vorteilhaften Ausführungsform ist die Sendeeinheit oder zumindest das für die Abstrahlung des Positionsidentifikationssignals wirksame Antennenelement an einer Kante der Beleuchtungseinrichtung angeordnet, insbesondere an einer Ecke der Beleuchtungseinrichtung. Eine derartige Anordnung ist insbesondere in Verbindung mit einer Beleuchtungseinrichtung vorteilhaft, welche ein Metallgehäuse aufweist. Bei einer rechteckigen Beleuchtungseinrichtung, beispielsweise bei einer sogenannten Langfeldleuchte, kann die Anordnung der Sendeeinheit zur gezielten Beeinflussung der charakteristischen Funkausbreitung genutzt werden. Bei einer derartigen Befestigung, dass das Antennenelement bei einer deckeninstallierten Beleuchtungseinrichtung das unterste Element ist, können somit Funkwechselwirkungen mit anderen Elementen der Beleuchtungseinrichtung, insbesondere in horizontaler Richtung, minimiert werden.

Bei einer Anordnung der Sendeeinheit an einer kurzen Kante der Beleuchtungseinrichtung erfolgt eine stärkere Ausbreitung des Signals in Richtung der längeren Kante als in Richtung des freien Feldes an der Seite der kurzen Kante. Dadurch entsteht ein charakteristisches trapezförmiges beziehungsweise eiförmiges Funksignalfeld, das insbesondere für Raumecken und Gangenden vorteilhaft einsetzbar ist. Zur Erzielung eines symmetrischen, insbesondere eines ellipsenförmigen Funksignalfelds kann vorgesehen sein, dass die Sendeeinheit in der Mitte der Beleuchtungseinrichtung angeordnet ist. Dies ist insbesondere geeignet für den Einsatz in der Mitte eines Raumes, bevorzugt in der Mitte eines Ganges.

In einer weiteren vorteilhaften Ausführungsform weist die Beleuchtungseinrichtung ein Außengehäuse aus einem elektrisch nicht leitenden Material auf, insbesondere Kunststoff, wobei die Sendeeinheit innerhalb des Außengehäuses angeordnet ist. Eine Anordnung der Sendeeinheit innerhalb des Außengehäuses ist dann zu bevorzugen, wenn ein besonderer Schutz der Sendeeinheit benötigt wird. Damit kann die Sendeeinheit zudem optisch verborgen angeordnet sein, was insbesondere bei einer Beleuchtungseinrichtung als einem designgeprägten Gegenstand aufgrund ästhetischer Designvorgaben zweckmäßig sein kann. Die Anordnung kann insbesondere auch dann zweckmäßig sein, wenn ein breites uneingeschränktes Funksignalfeld einer Sendeeinheit nach unten erforderlich ist.

In einer weiteren bevorzugten Ausführungsform ist die Sendeeinheit oder zumindest das für die Abstrahlung des Positionsidentifikationssignals wirksame Antennenelement der Sendeeinheit in einer vorgegebenen Relativposition zu dem Leuchtmittel, insbesondere unmittelbar an dem Leuchtmittel angeordnet. Bei dem Leuchtmittel kann es sich hierbei insbesondere um ein LED-Leuchtmittel handeln. Ein LED-Leuchtmittel kann beispielsweise aus einem LED-Trägermodul in Form einer Leiterplatte (PCB) gebildet sein, auf die eine oder mehrere LED-Einheiten aufgebracht sind. Bei einer Montage der Sendeeinheit auf einem solchen LED-Trägermodul ist somit die Sendeeinheit zwangsläufig in einem Bereich angeordnet, der auch für die Aussendung des Lichts mit einer vorgebbaren Abstrahlcharakteristik vorgesehen ist, nämlich mit einem definierten Lichtkegel. Eine solche Montageposition ist somit vorzugsweise geeignet, ein dem Lichtkegel geometrisch ähnliches Funksignalfeld zu erzeugen.

In einer weiteren vorteilhaften Ausführungsform ist das für die Abstrahlung des Positionsidentifikationssignals wirksame Antennenelement hinsichtlich einer Abstrahlrichtung in Bezug auf die Beleuchtungseinrichtung und/oder hinsichtlich eines Öffnungswinkels eines Abstrahlkegels verstellbar. Insbesondere kann vorgesehen sein, dass die Sendeeinheit eine eigene Verstellvorrichtung zur Anpassung der Abstrahlcharakteristik des abgestrahlten Bereichs des Funksignals aufweist, welche unabhängig von einem Lichtlenkungselement der Beleuchtungseinrichtung beispielsweise in Form eines Reflektors ist. Vielmehr kann diese Verstellvorrichtung ausschließlich zur Anpassung der Abstrahlcharakteristik der Sendeeinheit vorgesehen sein, beispielsweise in Form einer Blende und/oder eines Reflektors. In besonders bevorzugter Weise kann hierbei vorgesehen sein, dass mittels einer in einer relativen Position zueinander veränderbaren Anordnung von Antennenelement und Funkreflektor eine Anpassung der Abstrahlcharakteristik beispielsweise in Abhängigkeit von einer Deckenhöhe eingestellt werden kann.

In einer weiteren vorteilhaften Ausführungsform der Beleuchtungseinrichtung umfasst die Sendeeinheit eine Datenverarbeitungseinheit zur Bereitstellung der Positionsbestimmungsdaten, wobei die Datenverarbeitungseinheit räumlich getrennt von dem Antennenelement angeordnet ist. Bevorzugt kann auch ein Hochfrequenzgenerator zur Erzeugung des elektrischen Signals, welches in das Antennenelement eingeleitet wird, und welcher Teil der Sendeeinheit ist, räumlich getrennt von dem Antennenelement angeordnet sein, insbesondere als konstruktiv mit der Datenverarbeitungseinheit kombinierte Baugruppe. Auf diese Weise ergibt sich eine größere Freiheit in der Gestaltung der Komponentenanordnung, was insbesondere dann vorteilhaft ist, wenn nur ein begrenzter Einbauplatz an der Stelle zur Verfügung steht, an welchem das Funksignal abgestrahlt werden soll. Die Datenverarbeitungseinheit kann bevorzugt als Mikroprozessor oder Mikrocontroller ausgebildet sein. Insbesondere können die Positionsbestimmungsdaten in einem Datenspeicher der Datenverarbeitungseinheit gespeichert sein, beispielsweise in einem RAM (Random Access Memory), ROM (Read-Only Memory), EEPROM (Electrically Erasable Programmable Read-Only Memory) oder Flash-Speicher (Flash-EEPROM).

In einer weiteren vorteilhaften Ausführungsform weist die Beleuchtungseinrichtung ein elektronisches Betriebsgerät für das Leuchtmittel auf, wobei das elektronische Betriebsgerät zwischen einen elektrischen Versorgungsanschluss der Beleuchtungseinrichtung und das Leuchtmittel gekoppelt ist. Bei dem elektronischen Betriebsgerät kann es sich insbesondere um ein elektronisches Vorschaltgerät für ein Leuchtdioden-Modul (LED-Modul) handeln. Das elektronische Betriebsgerät kann in vorteilhafter Weise eine Schnittstelle zu einer externen Steuereinrichtung, beispielsweise einem Lichtmanagementsystem, aufweisen. Besonders vorteilhaft kann vorgesehen sein, dass die Sendeeinheit über die Schnittstelle parametrierbar ist.

In einer vorteilhaften Weiterbildung weist das elektronische Betriebsgerät ein Gehäuse aus einem elektrisch nicht leitenden Material, insbesondere Kunststoff, auf, wobei die Sendeeinheit innerhalb des Gehäuses des elektronischen Betriebsgeräts angeordnet ist. Dadurch ist die Sendeeinheit besonders gut vor äußeren Einflüssen geschützt.

Besonders bevorzugt ist die Sendeeinheit zu ihrer elektrischen Eigenversorgung mit dem elektronischen Betriebsgerät gekoppelt. Hierdurch ergibt sich ein deutlich reduzierter Wartungsaufwand für die Sendeeinheiten, da ein Batteriewechsel nicht mehr erforderlich ist. Dadurch kann auch auf eine direkte Zugänglichkeit der Sendeeinheiten verzichtet werden, wodurch sich größere Freiheitsgrade im Hinblick auf die Gestaltung der Anordnung innerhalb des Betriebsgeräts und/oder der Beleuchtungseinrichtung ergeben.

Eine erfindungsgemäße Beleuchtungsanlage zur Bereitstellung von Positionsbestimmungsdaten ergibt sich aus einer Beleuchtungsanlage, welche eine Vielzahl von erfindungsgemäßen Beleuchtungseinrichtungen umfasst, wobei die Beleuchtungseinrichtungen gemäß einem vorgebbaren Installationsschema für den bestimmungsgemäßen Betrieb angeordnet sind, wobei die Sendeleistung der jeweiligen Positionsidentifikationssignale und/oder die jeweilige Abstrahlcharakteristik in Abhängigkeit von einer Installationshöhe einstellbar ist. Sendeleistung in diesem Zusammenhang charakterisiert bei einem gepulsten Sendebetrieb, der bei dem Einsatz von Funk-Baken zur periodischen Abstrahlung von Positionsidentifikationssignalen üblicherweise vorliegt, nicht die mittlere Sendeleistung, sondern die Sendeleistung während der Abstrahlung des Positionsidentifikationssignals, also mit der Sendeleistung während eines Sendepulses. Sie ist somit korreliert mit der Amplitude eines entsprechenden Spannungs- beziehungsweise Stromsignals, welches in das Antennenelement eingespeist wird.

Mittels einer Integration von Sendeeinheiten in zumindest einen Teil von Beleuchtungseinrichtungen innerhalb eines Areals kann dieses Areal nun vollständig mit Beleuchtungseinrichtungen und gleichzeitig mit Sendeeinheiten ausgestattet werden. Insbesondere kann damit eine vollständige Abdeckung des Areals, in dem die Beleuchtungsanlage installiert ist, mit Positionsbestimmungsdaten, welche über gerichtete Positionsidentifikationssignale, die über Funk übertragen werden, erreicht werden. Eine vollständige Abdeckung mit Funksignalen zur Positionsidentifikation in einem Areal lässt sich somit anhand der Leuchteninstallationsplanung beeinflussen. In Abhängigkeit von der Abstrahlcharakteristik der Sendeeinheiten innerhalb der Beleuchtungsanlage, welche individuell an die jeweilige Einbauposition anpassbar sind, kann beispielsweise vorgesehen sein, dass Beleuchtungseinrichtungen entsprechend einem zweidimensionalen Gitternetz, insbesondere einem orthogonalen Gitternetz, angeordnet sind, wobei bevorzugt jeweils entlang einer Gitterlinien jeweils abwechselnd eine Beleuchtungseinrichtung ohne Sendeeinheit und eine Beleuchtungseinrichtung der erfindungsgemäßen Art angeordnet ist. Auf diese Weise ergibt sich eine komplementäre Anordnung von Beleuchtungseinrichtungen (Einzel-Leuchten) mit und ohne Funksendeeinheit. Die Sendeeinheiten werden somit zumindest in einem Teil der Beleuchtungseinrichtungen installiert und in bevorzugter Weise direkt mit Energie versorgt.

Die Sendeeinheiten können dabei so ausgelegt sein, permanent über eine Abstrahlung eines Funksignals eine innerhalb der Beleuchtungsanlage jeweils einmalige Identifikationsnummer auszusenden, wobei die Identifikationsnummern als Positionsbestimmungsdaten dienen. Bevorzugt ist auf einer Speichereinheit, welche von einem Gerät eines Nutzers abfragbar ist, hinterlegt, an welchem Punkt des Areals welche Sendeeinheit wie stark zu erfassen ist. Dazu wird mittels eines einmalig durchzuführenden Scanvorgangs das gesamte Areal mit einem entsprechenden Aufnahmegerät abgetastet, um für jeden Punkt entsprechend einer vorgebbaren örtlichen Auflösung einen als "Fingerabdruck" bezeichneten Datensatz von Signalstärken und Identifikationsnummern (ID) aufzuzeichnen, die an dem entsprechenden Punkt empfangen werden können. Bei einer genügend dichten Anordnung von erfindungsgemäßen Beleuchtungseinrichtungen entsteht somit jeweils ein charakteristischer Fingerabdruck. Mittels eines derartigen Fingerabdrucks kann nun ein Empfangsgerät an den Datenspeicher eine Abfrage senden, welcher Ort innerhalb des Areals mit diesem Fingerabdruck korreliert ist. Somit kann mittels der erfindungsgemäßen Beleuchtungsanlage in Verbindung mit einem entsprechenden Kommunikationsgerät, welches Zugriff auf einen Speicherinhalt hat, in dem die Fingerabdrücke des jeweiligen Areals abgelegt sind, ein Selbstortungssystem bereitgestellt werden und bei Vorhandensein entsprechenden Navigationsdaten auch eine Navigationsfunktionalität bereitgestellt werden.

In einer vorteilhaften Weiterbildung ist die Beleuchtungsanlage derart konfiguriert, dass zumindest innerhalb 95 Prozent einer durch die Beleuchtungsanlage beleuchteten Fläche zumindest zwei Positionsidentifikationssignale von jeweils zwei unterschiedlichen Beleuchtungseinrichtungen der Vielzahl von Beleuchtungseinrichtungen empfangbar sind und/oder zumindest innerhalb 80 Prozent einer durch die Beleuchtungsanlage beleuchteten Fläche zumindest drei Positionsidentifikationssignale von jeweils drei unterschiedlichen Beleuchtungseinrichtungen der Vielzahl von Beleuchtungseinrichtungen empfangbar sind. In diesem Zusammenhang ist die beleuchtete Fläche ein der Beleuchtungsanlage zugeordnetes Areal, für dessen Ausleuchtung die Beleuchtungsanlage gemäß der ihr zugrundeliegenden Lichtplanung konzipiert wurde. Beleuchtete Fläche in diesem Zusammenhang ist daher unabhängig davon zu sehen, welcher Teil der Fläche in der konkreten Situation tatsächlich beleuchtet wird, wenn beispielsweise ein Teil der Beleuchtungseinrichtungen ausgeschaltet ist.

Die Erfindung geht weiterhin aus von einem Verfahren zum Betreiben einer Beleuchtungseinrichtung mit einem Leuchtmittel und einer Sendeeinheit. Erfindungsgemäß wird das Verfahren weitergebildet durch ein gerichtetes Senden eines Positionsidentifikationssignals in Form eines Funksignals mit einer vorgebbaren Abstrahlcharakteristik, wobei das Positionsidentifikationssignal Positionsbestimmungsdaten betreffend eine Position der Sendeeinheit und/oder des Leuchtmittels umfasst, wobei mittels eines Lichtlenkungselements der Beleuchtungseinrichtung jeweils der überwiegende Teil sowohl des abgestrahlten Positionsidentifikationssignals als auch des von dem Leuchtmittel abgestrahlten Lichts gelenkt wird.

Die für die erfindungsgemäße Beleuchtungseinrichtung beschriebenen Vorteile und Merkmale sowie Ausführungsformen gelten ebenso für die erfindungsgemäße Beleuchtungsanlage und gleichermaßen für das entsprechende Verfahren und umgekehrt. Folglich können für Vorrichtungsmerkmale entsprechende Verfahrensmerkmale und umgekehrt vorgesehen sein.

Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen als von der Erfindung umfasst und offenbart anzusehen, die in den Figuren nicht explizit gezeigt oder erläutert sind, jedoch durch separierte Merkmalskombinationen aus den erläuterten Ausführungen hervorgehen und erzeugbar sind.

Weitere Vorteile und Merkmale ergeben sich anhand der vorliegenden Beschreibung von Ausführungsbeispielen unter Berücksichtigung der beigefügten Figuren. In den Figuren bezeichnen gleiche Bezugszeichen gleiche Merkmale und Funktionen.

### Es zeigen:

- Fig. 1: in vereinfachter schematischer Darstellung (Schnittseitenansicht) eine bevorzugte erste Ausführungsform einer erfindungsgemäßen Beleuchtungseinrichtung,
- Fig. 2a: in vereinfachter schematischer Darstellung (Schnittseitenansicht) ein Lichtlenkungselement gemäß einer bevorzugten zweiten Ausführungsform einer erfindungsgemäßen Beleuchtungseinrichtung,
- Fig. 2b: in vereinfachter schematischer Darstellung (Schnittseitenansicht) ein Lichtlenkungselement gemäß einer bevorzugten dritten Ausführungsform einer erfindungsgemäßen Beleuchtungseinrichtung,
- Fig. 3: in vereinfachter schematischer Darstellung (Schnittseitenansicht) ein Lichtlenkungselement gemäß einer bevorzugten vierten Ausführungsform einer erfindungsgemäßen Beleuchtungseinrichtung,
- Fig. 4: in vereinfachter schematischer Darstellung (Schnittseitenansicht) einen Ausschnitt aus einer bevorzugten fünften Ausführungsform einer erfindungsgemäßen Beleuchtungseinrichtung,
- Fig. 5: in vereinfachter schematischer Darstellung (Schnittseitenansicht) eine bevorzugte sechste Ausführungsform einer erfindungsgemäßen Beleuchtungseinrichtung,
- Fig. 6: in schematischer Darstellung bevorzugte Montagepositionen von Sendeeinheiten an einer Beleuchtungseinrichtung,
- Fig. 7a, Fig. 7b: in vereinfachter schematischer Darstellung eine charakteristische Funkausbreitung bei unterschiedlichen Montagepositionen der Sendeeinheit an einer Beleuchtungseinrichtung,
- Fig. 8: in vereinfachter schematischer Darstellung (Schnittseitenansicht) eine bevorzugte siebte Ausführungsform einer erfindungsgemäßen Beleuchtungseinrichtung,
- Fig. 9a: in vereinfachter schematischer Darstellung (Schnittseitenansicht) eine bevorzugte achte Ausführungsform einer erfindungsgemäßen Beleuchtungseinrichtung,
- Fig. 9b: in vereinfachter schematischer Darstellung (Schnittseitenansicht) eine bevorzugte neunte Ausführungsform einer erfindungsgemäßen Beleuchtungseinrichtung,
- Fig. 10a, Fig. 10b: in vereinfachter schematischer Darstellung (Schnittseitenansicht) Anordnungen eines Antennenelements, welche eine Verstellbarkeit der Abstrahlrichtung und/oder des Öffnungswinkels eines Abstrahlkegels ermöglichen,
- Fig. 11: in schematischer Darstellung eine beispielhafte Szenerie in einem Supermarkt, in der erfindungsgemäße Beleuchtungseinrichtungen einsetzbar sind,
- Fig. 12a: in vereinfachter schematischer Darstellung eine Anordnung von Sendeeinheiten mit einem breiten Abstrahlkegel,
- Fig. 12b: in vereinfachter schematischer Darstellung eine Anordnung von Sendeeinheiten mit einem gerichteten, einbausituationsgerecht angepassten Signalkegel, und
- Fig. 13: in vereinfachter schematischer Darstellung eine bevorzugte Ausführungsform einer erfindungsgemäßen Beleuchtungsanlage.

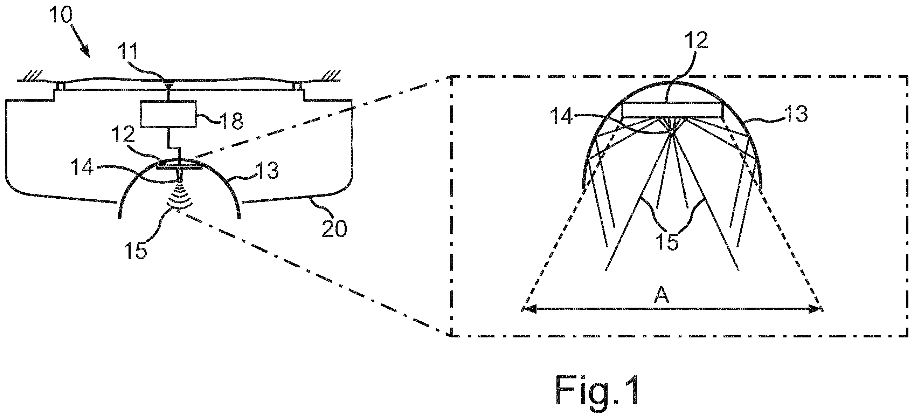

Eine bevorzugte erste Ausführungsform einer erfindungsgemäßen Beleuchtungseinrichtung 10 ist in der Fig. 1 dargestellt. Die Beleuchtungseinrichtung 10 umfasst ein Leuchtmittel 12, welches beispielsweise aus zumindest einer LED aufgebaut sein kann, welche auf einem Trägermodul angeordnet ist. Das Trägermodul kann in Form einer Leiterplatte (PCB) vorliegen. Die Beleuchtungseinrichtung 10 umfasst weiterhin ein Lichtlenkungselement 13, welches in der vorliegenden Form als Reflektor ausgebildet ist. Ein derartiger Reflektor ist vorzugsweise aus Metall gebildet oder weist zumindest eine metallische Beschichtung auf. Die Beleuchtungseinrichtung 10 umfasst weiterhin eine Sendeeinheit 14, welche gemäß der bevorzugten ersten Ausführungsform auf dem Leuchtmittel 12 angeordnet ist. Von der Sendeeinheit 14, insbesondere einem Antennenelement der Sendeeinheit 14, wird ein Positionsidentifikationssignal 15 in Form eines Funksignals abgestrahlt, wobei das Funksignal als gerichtetes Funksignal mit einer vorgebbaren Abstrahlcharakteristik ausgebildet ist. Eine jeweilige Abstrahlcharakteristik kann hierbei bereits durch die Ausgestaltung des Antennenelements selbst vorgegeben sein, ebenso kann vorgesehen sein, dass die Abstrahlcharakteristik im Zusammenwirken mit dem Lichtlenkungselement 13 definiert wird.

Bevorzugt kann die Beleuchtungseinrichtung 10 ein elektronisches Betriebsgerät 18 für den Betrieb des Leuchtmittels 12 aufweisen, wobei das elektronische Betriebsgerät 18 zwischen einen elektrischen Versorgungsanschluss 11 der Beleuchtungseinrichtung 10 und das Leuchtmittel 12 gekoppelt ist. Bei dem Versorgungsanschluss 11 kann es sich beispielsweise um einen Standardnetzspannungsanschluss mit 230 Volt/50 Hertz handeln. Es kann jedoch auch vorgesehen sein, dass der Versorgungsanschluss 11 aus einer Gleichspannungsquelle gespeist wird, vorzugsweise mit einer Spannung zwischen 12 und 48 Volt.

In der Fig. 1 ist des Weiteren detaillierter eine Teilansicht mit der Sendeeinheit 14, dem Leuchtmittel 12 sowie dem Lichtlenkungselement 13 dargestellt, bei welchem exemplarisch der Strahlengang des gerichteten Funksignals, welches das Positionsidentifikationssignal 15 bildet, angedeutet ist. Des Weiteren ist ein Signalkegel A dargestellt, innerhalb dessen die Ausbreitung des von dem Leuchtmittel 12 abgestrahlten Lichts und/oder von dem von der Sendeeinheit 14 abgestrahlten Funksignals erfolgt.

Mittels einer Anordnung der Sendeeinheit 14 direkt auf einem LED-Trägermodul kann ein durch das Lichtlenkungselement 13 definierter Signalkegel A auch für die Festlegung der Abstrahlcharakteristik des gerichteten Funksignals verwendet werden. Auf diese Weise können sowohl das abgestrahlte Licht als auch das Funksignal sich im Wesentlichen innerhalb desselben Signalkegels A ausbreiten.

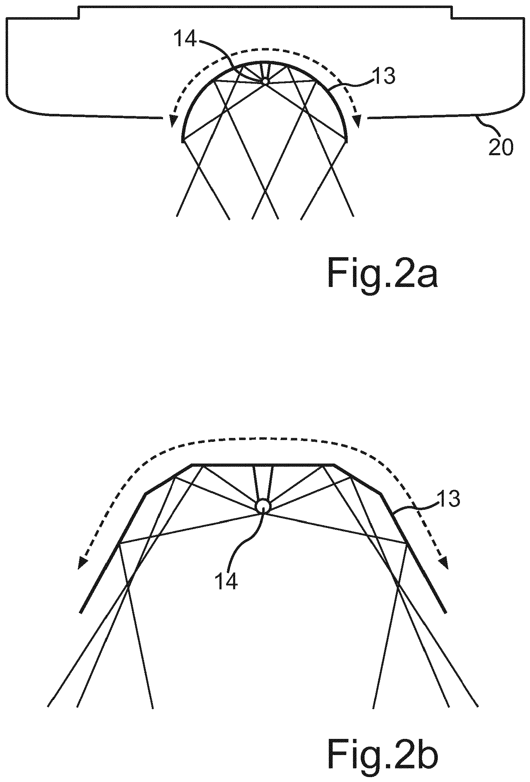

In einer bevorzugten zweiten Ausführungsform ist das Lichtlenkungselement 13 als gewölbter Reflektor ausgebildet ohne Knicke und Biegekanten, beispielsweise mit einer parabelförmigen Ausformung in der in Fig. 2a dargestellten Seitenansicht. Die Beleuchtungseinrichtung 10 kann, wie bereits in der Fig. 1 zuvor in Seitenansicht dargestellt, als Langfeldleuchte ausgebildet sein, bei welcher das Lichtlenkungselement 13 die Form eines Segments eines rohrförmigen Reflektors hat.

Das Lichtlenkungselement 13 kann hierbei bevorzugt schwenkbar angeordnet sein, sodass ein Arretierungsfreiheitsgrad zur Modifizierung des Funksignalfeldes ermöglicht wird. Wie bereits in der Darstellung zuvor, kann auch hier die Sendeeinheit 14 auf dem Leuchtmittel 12 in Form eines LED-Trägermoduls mit darauf aufgebrachten LED-Elementen gebildet sein.

In einer alternativen bevorzugten dritten Ausführungsform gemäß der Darstellung in der Fig. 2b kann das Lichtlenkungselement 13 aus einem metallischen Reflektor gebildet sein, das heißt, dass der Reflektor aus einem metallischen Werkstoff besteht oder mit einer metallischen Beschichtung versehen ist. Beispielsweise kann das Lichtlenkungselement 13 in dieser Ausgestaltung aus einem gebogenen Blech hergestellt sein, welches an vorgebbaren Stellen Biegekanten aufweist und zwischen diesen Biegekanten eine jeweils ebene Teilfläche bildet.

Wie bereits in der zweiten Ausführungsform, welche in der vorhergehenden Fig. 2a dargestellt ist, kann auch in dieser Ausgestaltung das Lichtlenkungselement 13 verstellbar, das heißt schwenkbar, ausgeführt sein, wodurch das gerichtete Funksignal modifiziert werden kann.

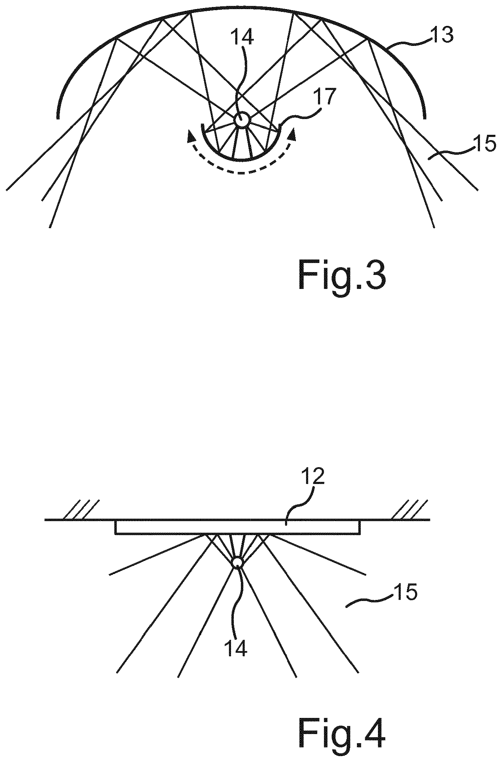

In einer bevorzugten vierten Ausführungsform gemäß der Darstellung in der Fig. 3 ist die Sendeeinheit 14 an einem Funkreflektorelement 17 angeordnet, welches in seiner Ausrichtung verstellbar ist. Das bereits in einer ersten Stufe gerichtete Funksignal trifft nunmehr auf das Lichtlenkungselement 13 und wird nun in einer zweiten Stufe nochmals reflektiert. Auf diese Weise kann eine indirekte Ausbreitung des Funksignals erzielt werden.

Eine weitere Möglichkeit der gerichteten Abstrahlung des Positionsidentifikationssignals 15 als gerichtetes Funksignal besteht mittels einer bevorzugten fünften Ausführungsform gemäß der Darstellung in der Fig. 4 darin, die Sendeeinheit 14 auf dem Leuchtmittel 12 derart anzuordnen, dass leitfähige Elemente des Leuchtmittels 12 zur Reflexion des Funksignals genutzt werden können, sodass in einer Anordnung, in der das Leuchtmittel 12 nach unten strahlt, eine Ausbreitung des Funksignals nach oben verhindert wird, indem das Funksignal in dieser Richtung abgeschirmt wird. Bevorzugt kann dies durch eine besondere metallische Schirmfläche auf oder innerhalb des Leuchtmittels 12 erfolgen, beispielsweise bei einem LED-Leuchtmittel, welches in Form von LED-Bauelementen auf einem Trägermodul aufgebaut ist, auf oder innerhalb des Trägermoduls (Leiterplatte).

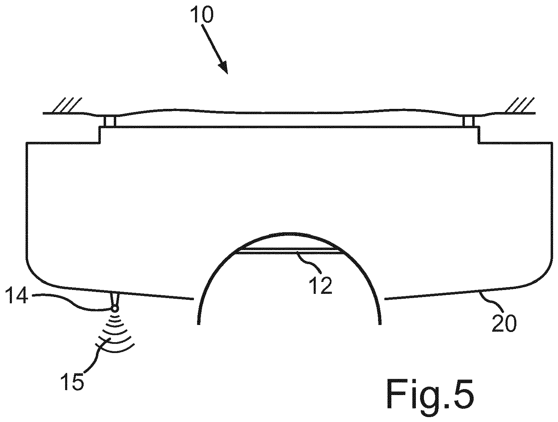

Gemäß einer bevorzugten sechsten Ausführungsform einer erfindungsgemäßen Beleuchtungseinrichtung 10, wie in der Fig. 5 dargestellt, kann die Sendeeinheit 14 unabhängig von dem Leuchtmittel 12 an dem Außengehäuse 20 der Beleuchtungseinrichtung 10 angeordnet sein. Bei einer bestimmungsgemäßen Anordnung der Beleuchtungseinrichtung 10, welche in der dargestellten Form als Deckenleuchte zur Deckenmontage ausgebildet ist, kann die Sendeeinheit 14 an unterster Stelle der Beleuchtungseinrichtung 10 angeordnet sein. Für die Erzielung einer breiten Abstrahlcharakteristik des Positionsidentifikationssignals 15 ist es hierbei nicht erforderlich, dass die Sendeeinheit über die vollständige Länge und Breite der Beleuchtungseinrichtung 10 betrachtet tatsächlich an der untersten Stelle angeordnet ist, vielmehr kann vorgesehen sein, dass die Sendeeinheit 15 innerhalb eines vorgebbaren Umkreises von keinen die Funksignalausbreitung behindernden oder störenden Elementen der Beleuchtungseinrichtung 10 nach unten überragt wird.

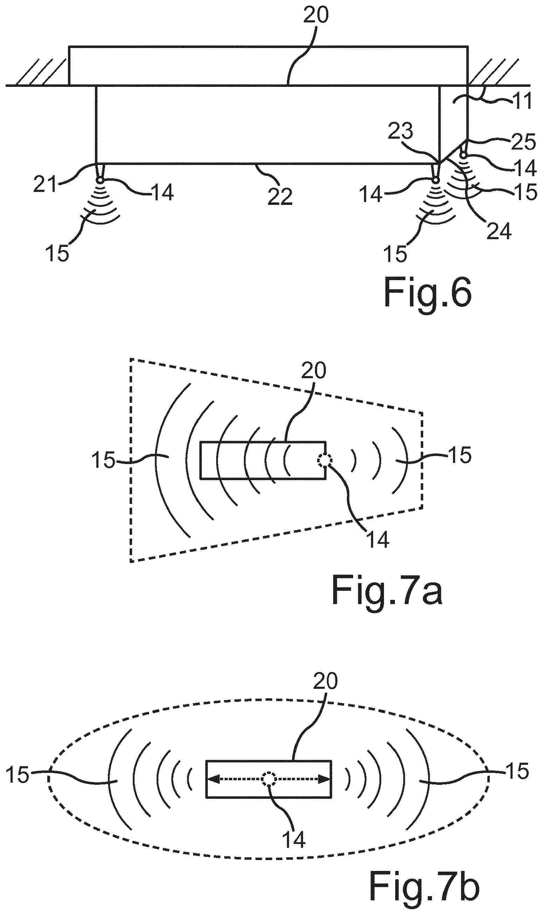

Bevorzugte Montagepositionen von Sendeeinheiten an Beleuchtungseinrichtungen entsprechend der Darstellung in Fig. 6 können derart vorgesehen sein, dass Sendeeinheiten 14 zur Abstrahlung von Positionsidentifikationssignalen 15 an Kanten 22, 24 und/oder Ecken 21, 23, 25 angeordnet sind. Eine derartige Anordnung ist besonders bevorzugt bei einem Außengehäuse 20 der Beleuchtungseinrichtung 10, welches aus einem metallischen Werkstoff hergestellt ist, vorgesehen. Wenn die Sendeeinheit 14 als unterstes Element angeordnet ist, kann hierdurch eine Minimierung von Funkwechselwirkungen erzielt werden.

Gerade bei der Verwendung eines metallischen Leuchtengehäuses als Außengehäuse 20 kann über die Anordnung der Sendeeinheit 14 an dem Außengehäuse 20 die charakteristische Ausbreitung des Positionsidentifikationssignals 15 zusätzlich beeinflusst werden. In der Darstellung in der Fig. 7a ist die Sendeeinheit 14 an einer kurzen Kante des Außengehäuses 20 der Beleuchtungseinrichtung 10 angeordnet. Hierdurch ergibt sich ein trapezförmiges Funksignalfeld, bei welchem sich das Funksignal durch den Einfluss des Außengehäuses 20 stärker ausbreitet als in der gegenüberliegenden Richtung nach rechts, also in Richtung auf den freien Raum. Zum Vergleich ist eine entsprechende Ausbreitungscharakteristik bei einer mittig an dem Außengehäuse 20 der Beleuchtungseinrichtung 10 angeordneten Sendeeinheit 14 dargestellt, welche ein symmetrisches, ellipsenförmiges Funksignalfeld ergibt. Gemäß der Darstellung in der Fig. 7b erfolgt hierbei die Ausbreitung des Positionsidentifikationssignals 15 in beide Richtungen, links und rechts, gleich stark. Aufgrund der kürzeren Dimension des Außengehäuses 20 der Beleuchtungseinrichtung 10 erfolgt hierbei eine Ausbreitung des Funksignals in einer dazu orthogonalen Querrichtung (in der Zeichenebene) deutlich abgeschwächt als in der primären Ausbreitungsrichtung. Diese Charakteristik kommt beispielsweise einer Montage von Langfeldleuchten in Gängen entgegen. Besonders bevorzugt kann daher vorgesehen sein, die Abstrahlcharakteristik bei einer bereits montierten Beleuchtungseinrichtung 10 in Abhängigkeit von den vorgefundenen Umgebungsbedingungen anzupassen und eine Verstellmöglichkeit der Arretierungsposition der Sendeeinheit 12 an der Beleuchtungseinrichtung 10 auszubilden. Beispielsweise kann eine Justierung über ein Schienensystem erfolgen. Im Falle einer elektrischen Versorgung der Sendeeinheit 14 aus der Beleuchtungseinrichtung 10 heraus kann hierbei beispielsweise die Zuführung elektrischer Energie über eine Schleppleitung oder über eine Schleifer-Kontakt-Bahn erfolgen.

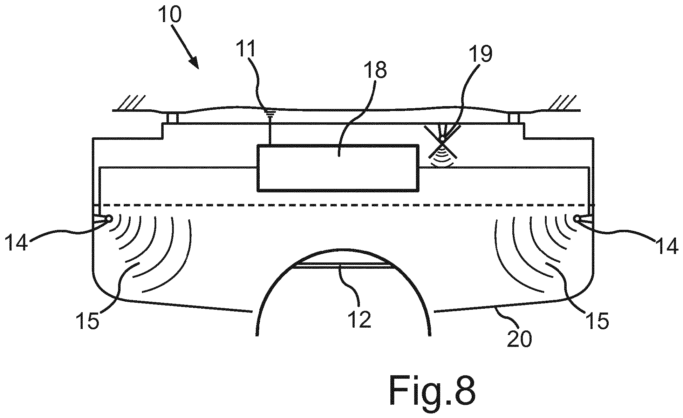

Gemäß einer bevorzugten siebten Ausführungsform einer Beleuchtungseinrichtung 10 ist innerhalb des Außengehäuses 20, welches beispielsweise aus einem Material mit einer geringen Dämpfung für das Positionsidentifikationssignal 15 besteht, beispielsweise aus Kunststoff, ein elektronisches Betriebsgerät 18 angeordnet, welches mit dem elektrischen Versorgungsanschluss 11 gekoppelt ist. Das elektronische Betriebsgerät 18 kann seinerseits ein Gehäuse aus einem metallischen Werkstoff, insbesondere ein Blechgehäuse, aufweisen. In diesem Fall ist es zweckmäßig, wenn die Sendeeinheit 14 unterhalb des elektronischen Betriebsgeräts 18 angeordnet wird, um eine seitliche Reflexion des Positionsinformationssignals 15 an einer Gehäusewand des Betriebsgeräts 18 zu vermeiden. Eine Montage der Sendeeinheit 14 an einer seitlichen Innenwand des Außengehäuses 20 kann hierbei vorteilhaft für die ungehinderte Abstrahlung des Positionsinformationssignals 15 genutzt werden. Beispielsweise kann eine Montage der Sendeeinheit 14 auf der rechten und/oder auf der linken Seite des Außengehäuses 20 vorgesehen sein. Eine Montage auf einer Oberseite der Leuchte an einer Position 19 gemäß der Darstellung der Fig. 8 ist aus den bereits genannten Gründen weniger gut geeignet.

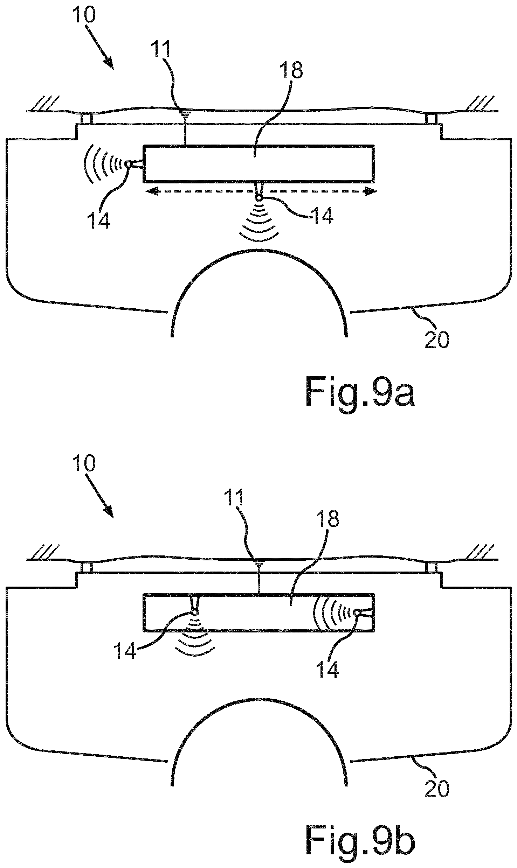

In einer bevorzugten achten Ausführungsform einer Beleuchtungseinrichtung 10 gemäß der Fig. 9a ist die Sendeeinheit 14 auf einem Gehäuse des elektronischen Betriebsgeräts 18 angeordnet, wobei bevorzugt das Gehäuse des elektronischen Betriebsgeräts 18 aus einem metallischen Werkstoff hergestellt ist. Wie bereits in der zuvor dargestellten siebten Ausführungsform ist auch in der achten Ausführungsform das Außengehäuse 20 aus einem die Funksignalausbreitung nicht oder nur unwesentlich abschwächenden Material hergestellt, beispielsweise Kunststoff. Wie auch bei Montage auf einem metallischen Außengehäuse 20 der Beleuchtungseinrichtung 10 kann auch bei einer Montage auf dem elektronischen Betriebsgerät 18 vorgesehen sein, die Sendeeinheit 14 auf dem Gehäuse des elektronischen Betriebsgeräts 18 verschiebbar anzuordnen. Für den Fall, dass das Gehäuse des elektronischen Betriebsgeräts 18 nicht aus einem metallischen Werkstoff besteht, das heißt dieses Gehäuse eine geringe Dämpfung für ein Funksignal bewirkt, kann in einer bevorzugten neunten Ausführungsform die Sendeeinheit 14 in bevorzugter Weise innerhalb dieses Gehäuses angeordnet sein. Auf diese Weise ergeben sich vielfältige Vorteile im Hinblick auf eine Anbindung der Sendeeinheit 14 an das elektronische Betriebsgerät 18, beispielsweise hinsichtlich der Energieversorgung und/oder einer Bereitstellung von Daten aus einer übergeordneten Steuerung oder dem elektronischen Betriebsgerät 18 selbst. Weiterhin ergibt sich der Vorteil eines besonderen Schutzes, insbesondere eines mechanischen Schutzes, der Sendeeinheit 14 vor äußeren Einflüssen. Mögliche Anordnungen der Sendeeinheit 14 innerhalb des elektronischen Betriebsgeräts 18 sind in der Fig. 9b dargestellt.

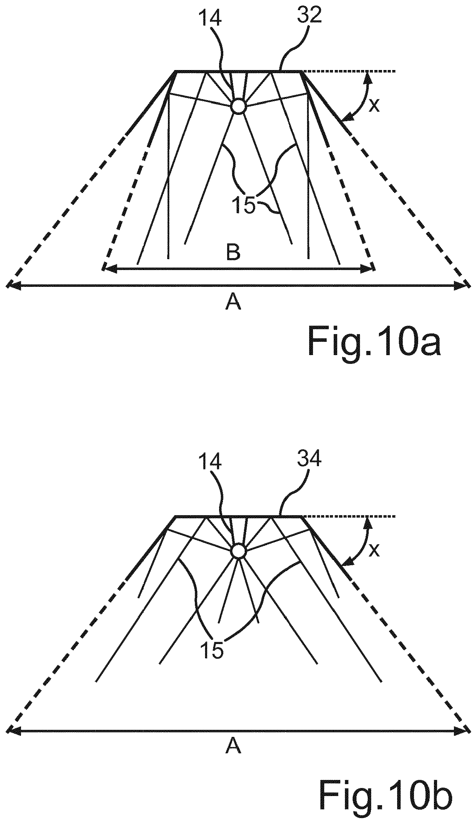

Gemäß einer weiteren bevorzugten Ausführungsform entsprechend der Darstellung in der Fig. 10a ist die Sendeeinheit 14 an einer ausschließlich für sie selbst vorgesehene Reflexionsvorrichtung 32 angeordnet. Hierbei ist die Sendeeinheit 14 innerhalb eines U-förmigen Profils mit klappbaren Seitenflächen, deren Winkel x einstellbar ist, angeordnet. Somit kann in einer ersten Einstellung der Reflexionsvorrichtung 32 für die Ausbreitung des Positionsidentifikationssignals 15 ein Signalkegel A erzeugt werden, wobei in einer zweiten Einstellung ein engerer Signalkegel B erzeugt werden kann. Insbesondere kann vorgesehen sein, dass beide Seitenwände unabhängig voneinander einstellbar sind (vergleiche Darstellung in der Fig. 10b). Mittels dieser Einstellbarkeit kann beispielsweise das Funksignalfeld bei unterschiedlichen Deckenhöhen modelliert werden.

Für jede der voranstehend dargestellten bevorzugten Ausführungsformen kann vorgesehen sein, eine Schnittstelle zur Energieversorgung aus dem elektronischen Betriebsgerät 18 und/oder eine Schnittstelle zum Datenaustausch mit dem elektronischen Betriebsgerät 18 bereitzustellen. In den Figuren ist die Sendeeinheit 14 durchgängig als kompakte, konstruktiv zusammenhängende Einheit dargestellt. Die Darstellung wurde zur besseren Übersicht gewählt, da eine Trennung in einzelne Baugruppen aus konstruktiven Gründen nahegelegt sein kann, auf die Anwendbarkeit der Erfindung hingegen keinen Einfluss hat. Vielmehr ist wesentlich für die Erfindung, dass ein für die Abstrahlung des Positionsidentifikationssignals 15 wirksames Antennenelement an den jeweiligen Positionen vorgesehen wird, an der in den Figuren die Sendeeinheit 14 dargestellt ist.

Mittels des Positionsidentifikationssignals 15 kann eine relative Position zur jeweiligen Beleuchtungseinrichtung 10 mithilfe dieses Signals näherungsweise identifiziert werden. Dabei handelt es sich um die klassische Beacon-Funktionalität. Im Verbund mehrerer Positionsidentifikationssignals 15 entsteht somit ein Raster beziehungsweise ein Orientierungssystem, das die Positionsidentifikation durch ein Endgerät verbessert. Wenn eine Beleuchtungseinrichtung 10 fest installiert ist, so kann aus der relativen Position gleichzeitig auch eine absolute Position abgeleitet werden.

Überdies kann auch vorgesehen sein, dass eine Sendeeinheit 14 anstelle eines Leuchtmittels 12 integriert ist. Dabei wird beispielsweise bei einer Ausführung als LED-Leuchtmittel eine LED aus einem LED-Trägermodul entnommen und stattdessen eine Antenne eingesetzt. Ebenso kann vorgesehen sein, an einer Stromschiene, an der normalerweise ein Leuchtmittel angebracht wird, eine Antenne mit entsprechender Vorrichtung zur Umsetzung einer bestimmten Abstrahlcharakteristik anzubringen. Überdies kann vorgesehen sein, dass mehrere Sendeeinheiten 14 in/an/anstelle eines jeweiligen Leuchtmittels 12 eingesetzt sind.

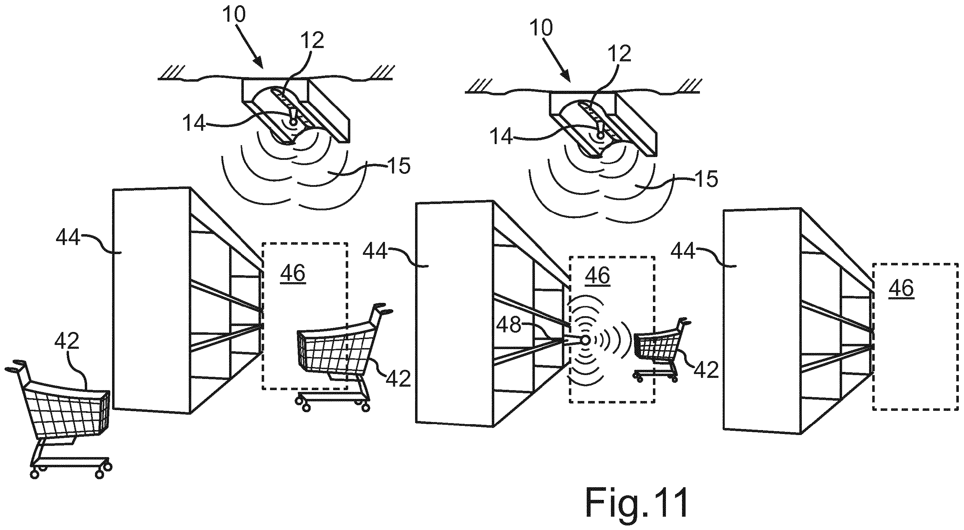

Eine beispielhafte Szenerie in einem Supermarkt, in welchem eine erfindungsgemäße Beleuchtungseinrichtung 10 einsetzbar ist, ist in der Fig. 11 stark vereinfacht dargestellt. Dabei sind an der Decke eines Raums in dem Supermarkt erfindungsgemäße Beleuchtungseinrichtungen 10 mit jeweils einem Leuchtmittel 12 sowie einer Sendeeinheit 14 angeordnet, welche ein Positionsidentifikationssignal 15 abstrahlen. Dieses Funksignal ist gerichtet. Die Sendeeinheit 14 ist hierbei in oder an der Beleuchtungseinrichtung 10 in Form einer Deckenleuchte verbaut. In dem Supermarkt werden Einkaufswagen 42 zwischen Supermarkt-Regalen 44 hindurch bewegt. In einem Bereich zwischen den Regalen, welcher durch den Empfangsbereich 46 dargestellt ist, können Funksignale durch Regale 44 und insbesondere durch die sich bewegenden Einkaufswagen 42 gestört werden. Dies tritt insbesondere dann verstärkt auf, wenn ein Funksender 48 der Einfachheit halber an einem Regal 44 befestigt wurde. Im Gegensatz zu einer Installation von Funksendern 48 auf unterer Raumhöhe, bei der sich Wechselwirkungen mit sich bewegenden Einkaufswagen 42, Regalen 44, Maschinen und sonstigen Gegenständen ergeben können, ist im Gegensatz dazu bei einer Signaleinstrahlung von oben weniger Störeinfluss durch Regale 44 und andere Gegenstände gegeben.

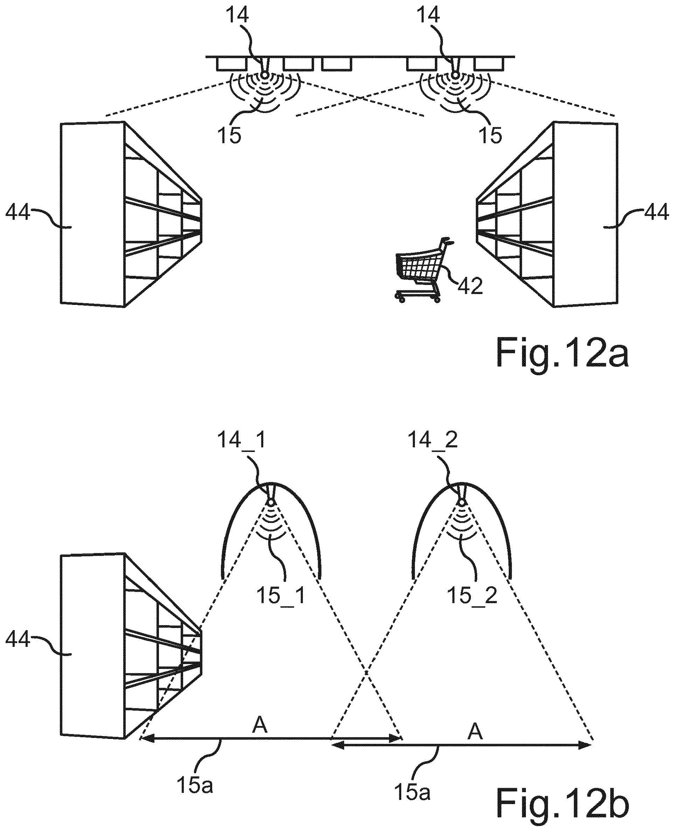

Bei einem ungerichteten Funksignal wie in Fig. 12a dargestellt wird häufig durch Gegenstände eine Störung durch ungewollte Reflexionen hervorgerufen. Das Positionsidentifikationssignal 15 kann durch Reflexionen am Regal 44 und/oder an der Deckeninstallation gestört werden. Auch eine Störung durch Einkaufswagen 42 ist möglich. Dadurch wird die Ortung ungenau. Die erfindungsgemäße Lösung zur Vermeidung von unnötigen Reflexionen und damit eine Störung der Signale zum Zwecke einer möglichst genauen Ortung ist in der Fig. 12b dargestellt. Hierbei umfasst eine Deckeninstallation beispielsweise jeweils eine Sendeeinheit 14 zur Abstrahlung eines Positionsidentifikationssignals 15, was mittels einer Reflexions-Optik auf einen jeweiligen Signalkegel A projiziert wird. Auf diese Weise kann beispielsweise eine einstellbare, geometrische Funkabdeckung erzielt werden, insbesondere mittels eines leicht überlappenden Primärsignals in den jeweiligen Signalkegeln A1 beziehungsweise A2.

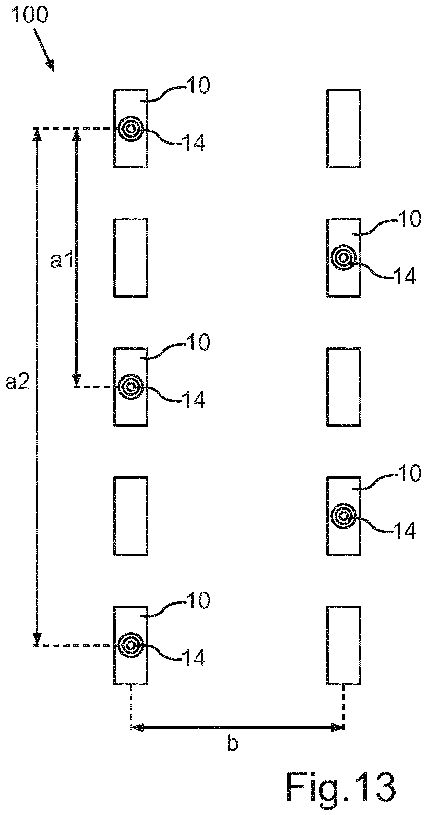

Eine vorteilhafte Ausführungsform einer erfindungsgemäßen Beleuchtungsanlage 100 ist in der Fig. 13 dargestellt. Hierbei sind beispielhaft zwei Reihen von Leuchten, sogenannte Lichtbänder, dargestellt, welche in einem Abstand b voneinander angeordnet sind. In Längsrichtung des Lichtbandes ist jeweils abwechselnd eine erfindungsgemäße Beleuchtungseinrichtung 10 mit einer Sendeeinheit 14 und eine Leuchte ohne Sendeeinheit angeordnet, wodurch sich ein alternierendes Schema im Abstand al ergibt. Beleuchtungseinrichtungen (Leuchten) sind in der Beleuchtungsanlage 100 (Leuchten-Installation) homogen verteilt. Hierdurch ergibt sich eine gleichmäßige Bereitstellung von Positionsidentifikationssignalen.

Empfehlenswerte Daten für eine Installation von Sendeeinheiten bei unterschiedlichen Deckenhöhen sind in der nachfolgenden Übersicht dargestellt. Bei Deckenhöhen von unter 3 Metern sollte das Positionsidentifikationssignal auf 3 bis 5 Meter Reichweite eingestellt werden. Bei Deckenhöhen zwischen 5 und 8 Metern sollte das Positionsidentifikationssignal auf 7 bis 8 Meter Reichweite eingestellt werden. Bei Deckenhöhen über 8 Metern sollte das Positionsidentifikationssignal auf mindestens 10 Meter Reichweite eingestellt werden. Auf diese Weise lassen sich besonders vorteilhafte Ergebnisse in der Positionsermittlungsgenauigkeit erzielen.

Die Ausführungsbeispiele dienen lediglich der Erläuterung der Erfindung und sind für diese nicht beschränkend. Insbesondere die Erzeugung der Lichtwirkung der Funksignale kann beliebig gestaltet sein, ohne den Gedanken der Erfindung zu verlassen. Somit wurde voranstehend gezeigt, wie eine (Funk-)Bake in einer Leuchte mit gerichteten Optiken eingesetzt werden kann, um eine verbesserte Positioniergenauigkeit zu erzielen.

## Patentansprüche

1. Beleuchtungseinrichtung (10) zur Bereitstellung eines Positionsidentifikationssignals (15), wobei die Beleuchtungseinrichtung ein Leuchtmittel (12) und eine ein Antennenelement umfassende Sendeeinheit (14) umfasst, wobei die Sendeeinheit dazu ausgelegt ist, bei einem bestimmungsgemäßen Betrieb das Positionsidentifikationssignal in Form eines gerichteten Funksignals mit einer vorgebbaren Abstrahlcharakteristik zu senden, wobei das Positionsidentifikationssignal Positionsbestimmungsdaten betreffend eine Position der Sendeeinheit und/oder des Leuchtmittels umfasst, **dadurch gekennzeichnet, dass** die Beleuchtungseinrichtung ein Lichtlenkungselement (22, 24, 26, 28) aufweist, welches dazu ausgelegt ist, jeweils den überwiegenden Teil sowohl des abgestrahlten Positionsidentifikationssignals (15) als auch des von dem Leuchtmittel (12) abgestrahlten Lichts zu lenken, wobei das Lichtlenkungselement (22, 24, 26, 28) als optischer Reflektor aus Metall gebildet ist oder zumindest eine metallische Beschichtung aufweist, wobei die Abstrahlcharakteristik im Zusammenwirken mit dem Lichtlenkungselement (22, 24, 26, 28) definiert ist, wodurch im Wesentlichen eine Überlappung von Lichtkegel und Funksignal realisiert ist, wobei die Sendeeinheit (14) an der Beleuchtungseinrichtung, mittels einer Justiervorrichtung, verschiebbar gelagert angeordnet ist.

2. Beleuchtungseinrichtung (10) nach Anspruch 1, **dadurch gekennzeichnet, dass** die Beleuchtungseinrichtung zur Deckenmontage ausgebildet ist, wobei die Sendeeinheit insgesamt oder zumindest das für die Abstrahlung des Positionsidentifikationssignals wirksame Antennenelement in einer bestimmungsgemäßen Einbaulage an unterster Stelle angeordnet ist.

3. Beleuchtungseinrichtung (10) nach einem der vorhergehenden Ansprüche,
**dadurch gekennzeichnet,**
**dass** die Sendeeinheit (14) oder zumindest das für die Abstrahlung des Positionsidentifikationssignals (15) wirksame Antennenelement an einer Kante (22, 24) der Beleuchtungseinrichtung angeordnet ist, insbesondere an einer Ecke (21, 23, 25) der Beleuchtungseinrichtung.

4. Beleuchtungseinrichtung (10) nach einem der vorhergehenden Ansprüche,
**dadurch gekennzeichnet,**
**dass** die Beleuchtungseinrichtung ein Außengehäuse (20) aus einem elektrisch nichtleitenden Material, insbesondere Kunststoff, aufweist, wobei die Sendeeinheit innerhalb des Außengehäuses angeordnet ist.

5. Beleuchtungseinrichtung (10) nach einem der vorhergehenden Ansprüche,
**dadurch gekennzeichnet,**
**dass** die Sendeeinheit (14) oder zumindest das für die Abstrahlung des Positionsidentifikationssignals (15) wirksame Antennenelement der Sendeeinheit in einer vorgegebenen Relativposition zu dem Leuchtmittel (12), insbesondere unmittelbar an dem Leuchtmittel, angeordnet ist.

6. Beleuchtungseinrichtung (10) nach einem der vorhergehenden Ansprüche,
**dadurch gekennzeichnet,**
**dass** das für die Abstrahlung des Positionsidentifikationssignals (15) wirksame Antennenelement hinsichtlich einer Abstrahlrichtung in Bezug auf die Beleuchtungseinrichtung und/oder hinsichtlich eines Öffnungswinkels eines Abstrahlkegels verstellbar ist.

7. Beleuchtungseinrichtung (10) nach einem der vorhergehenden Ansprüche,
**dadurch gekennzeichnet,**
**dass** die Sendeeinheit (14) eine Datenverarbeitungseinheit zur Bereitstellung der Positionsbestimmungsdaten umfasst, wobei die Datenverarbeitungseinheit räumlich getrennt von dem Antennenelement angeordnet ist.

8. Beleuchtungseinrichtung (10) nach einem der vorhergehenden Ansprüche,
**dadurch gekennzeichnet,**
**dass** die Beleuchtungseinrichtung ein elektronisches Betriebsgerät (18) für das Leuchtmittel (12) aufweist, wobei das elektronische Betriebsgerät zwischen einen elektrischen Versorgungsanschluss (11) der Beleuchtungseinrichtung und das Leuchtmittel gekoppelt ist.

9. Beleuchtungseinrichtung (10) nach Anspruch 8,
**dadurch gekennzeichnet,**
**dass** das elektronische Betriebsgerät (18) ein Gehäuse aus einem elektrisch nichtleitenden Material, insbesondere Kunststoff, aufweist, wobei die Sendeeinheit (14) innerhalb des Gehäuses des elektronischen Betriebsgeräts angeordnet ist.

10. Beleuchtungseinrichtung (10) nach Anspruch 8 oder 9,
**dadurch gekennzeichnet,**
**dass** die Sendeeinheit (14) zu ihrer elektrischen Eigenversorgung mit dem elektronischen Betriebsgerät (18) gekoppelt ist.

11. Beleuchtungsanlage (100) zur Bereitstellung von Positionsbestimmungsdaten mit einer Vielzahl von Beleuchtungseinrichtungen (10) nach einem der vorhergehenden Ansprüche, wobei die Beleuchtungseinrichtungen gemäß einem vorgebbaren Installationsschema für den bestimmungsgemäßen Betrieb angeordnet sind, wobei die Sendeleistung der jeweiligen abgestrahlten Positionsidentifikationssignale und/oder die jeweilige Abstrahlcharakteristik in Abhängigkeit von einer Installationshöhe einstellbar ist.

12. Beleuchtungsanlage (100) nach Anspruch 11,
**dadurch gekennzeichnet, dass** die Beleuchtungsanlage derart konfiguriert ist, dass zumindest innerhalb 95 Prozent einer durch die Beleuchtungsanlage beleuchteten Fläche zumindest zwei Positionsidentifikationssignale von jeweils zwei unterschiedlichen Beleuchtungseinrichtungen (10) der Vielzahl von Beleuchtungseinrichtungen empfangbar sind und/oder zumindest innerhalb 80 Prozent einer durch die Beleuchtungsanlage beleuchteten Fläche zumindest drei Positionsidentifikationssignale von jeweils drei unterschiedlichen Beleuchtungseinrichtungen der Vielzahl von Beleuchtungseinrichtungen empfangbar sind.

13. Verfahren zum Betreiben einer Beleuchtungseinrichtung (10) mit einem Leuchtmittel (12) und einer Sendeeinheit (14), wobei das Verfahren gerichtetes Senden eines Positionsidentifikationssignals (15) in Form eines Funksignals mit einer vorgebbaren Abstrahlcharakteristik umfasst, wobei das Positionsidentifikationssignal Positionsbestimmungsdaten betreffend eine Position der Sendeeinheit und/oder des Leuchtmittels umfasst, **dadurch gekennzeichnet, dass** mittels eines Lichtlenkungselements (22, 24, 26, 28) der Beleuchtungseinrichtung (10) jeweils der überwiegende Teil sowohl des abgestrahlten Positionsidentifikationssignals (15) als auch des von dem Leuchtmittel (12) abgestrahlten Lichts gelenkt wird, wobei das Lichtlenkungselement (22, 24, 26, 28) als Reflektor aus Metall bereitgestellt wird oder zumindest eine metallische Beschichtung aufweist, wobei die Abstrahlcharakteristik im Zusammenwirken mit dem Lichtlenkungselement (22, 24, 26, 28) definiert wird, wodurch im Wesentlichen eine Überlappung von Lichtkegel und Funksignal realisiert wird, wobei die Sendeeinheit (14) an der Beleuchtungseinrichtung, mittels einer Justiervorrichtung, verschiebbar gelagert angeordnet ist.

## Claims

1. A lighting device (10) for providing a position identification signal (15),
wherein the lighting device includes a lighting means (12) and a transmitting unit (14) including an antenna element, wherein
the transmitting unit is adapted to transmit the position identification signal in the form of a directed radio signal with a presettable emission characteristic in intended operation, wherein the position identification signal includes position determination data relating to a position of the transmitting unit and/or the lighting means, **characterized in that** the lighting device comprises a light directing element (22, 24, 26, 28), which is adapted to respectively direct the predominant part both of the emitted position identification signal (15) and of the light emitted by the lighting means (12), wherein the light directing element (22, 24, 26, 28) is formed as an optical reflector of metal or at least comprises a metallic coating, wherein the emission characteristic is defined in cooperation with the light directing element (22, 24, 26, 28), whereby an overlap of light cone and radio signal is substantially realized, wherein the transmitting unit (14) is arranged on the lighting device displaceably supported by means of an adjusting device.

2. The lighting device (10) according to claim 1,
**characterized in that**
the lighting device is formed for ceiling mounting, wherein the transmitting unit altogether or at least the antenna element effective for the emission of the position identification signal is arranged at lowest location in an intended installation position.

3. The lighting device (10) according to any one of the preceding claims,
**characterized in that**
the transmitting unit (14) or at least the antenna element effective for the emission of the position identification signal (15) is arranged at an edge (22, 24) of the lighting device, in particular at a corner (21, 23, 25) of the lighting device.

4. The lighting device (10) according to any one of the preceding claims,
**characterized in that**
the lighting device comprises an exterior housing (20) of an electrically non-conducting material, in particular plastic, wherein the transmitting unit is arranged within the exterior housing.

5. The lighting device (10) according to any one of the preceding claims,
**characterized in that**
the transmitting unit (14) or at least the antenna element of the transmitting unit effective for the emission of the position identification signal (15) is arranged in a preset relative position to the lighting means (12), in particular immediately on the lighting means.

6. The lighting device (10) according to any one of the preceding claims,
**characterized in that**
the antenna element effective for the emission of the position identification signal (15) is adjustable with respect to an emission direction with respect to the lighting device and/or with respect to an aperture angle of an emission cone.

7. The lighting device (10) according to any one of the preceding claims,
**characterized in that**
the transmitting unit (14) includes a data processing unit for providing the position determination data, wherein the data processing unit is arranged spatially separated from the antenna element.

8. The lighting device (10) according to any one of the preceding claims,
**characterized in that**
the lighting device comprises an electronic operating device (18) for the lighting means (12), wherein the electronic operating device is coupled between an electrical supply connection (11) of the lighting device and the lighting means.

9. The lighting device (10) according to claim 8,
**characterized in that**
the electronic operating device (18) comprises a housing of an electrically non-conducting material, in particular plastic, wherein the transmitting unit (14) is arranged within the housing of the electronic operating device.

10. The lighting device (10) according to claim 8 or 9,
**characterized in that**
the transmitting unit (14) is coupled to the electronic operating device (18) for its electrical self-supply.

11. A lighting system (100) for providing position determination data including a plurality of lighting devices (10) according to any one of the preceding claims, wherein the lighting devices are arranged according to a presettable installation scheme for the intended operation, wherein the transmitting power of the respective emitted position identification signals and/or the respective emission characteristic are adjustable depending on an installation height.

12. The lighting system (100) according to claim 11,
**characterized in that**
the lighting system is configured such that at least two position identification signals are receivable from respectively two different lighting devices (10) of the plurality of lighting devices at least within 95 percent of an area lighted by the lighting system and/or at least three position identification signals are receivable from respectively three different lighting devices of the plurality of lighting devices at least within 80 percent of an area lighted by the lighting system.

13. A method for operating a lighting device (10) with a lighting means (12) and a transmitting unit (14), wherein the method includes directed transmitting a position identification signal (15) in the form of a radio signal with a presettable emission characteristic, wherein the position identification signal includes position determination data relating to a position of the transmitting unit and/or the lighting means, **characterized in that** the predominant part both of the emitted position identification signal (15) and of the light emitted by the lighting means (12) is respectively directed by means of a light directing element (22, 24, 26, 28) of the lighting device (10), wherein the light directing element (22, 24, 26, 28) is provided as a reflector of metal or at least comprises a metallic coating, wherein the emission characteristic is defined in cooperation with the light directing element (22, 24, 26, 28), whereby an overlap of light cone and radio signal is substantially realized, wherein the transmitting unit (14) is arranged on the lighting device displaceably supported by means of an adjusting device.

## Revendications

1. Dispositif d'éclairage (10) destiné à mettre à disposition un signal d'identification de position (15), le dispositif d'éclairage comportant un moyen lumineux (12) et une unité d'émission (14) comprenant un élément d'antenne, l'unité d'émission étant conçue pour, lors d'un fonctionnement conforme à sa destination, émettre le signal d'identification de position sous la forme d'un signal radioélectrique directif ayant une caractéristique de rayonnement pouvant être prédéfinie, le signal d'identification de position comportant des données de détermination de position concernant une position de l'unité d'émission et/ou du moyen lumineux, **caractérisé en ce que** le dispositif d'éclairage possède un élément de déviation de lumière (22, 24, 26, 28), lequel est conçu pour dévier respectivement la partie principale aussi bien du signal d'identification de position (15) rayonné que de la lumière rayonnée par le moyen lumineux (12), l'élément de déviation de lumière (22, 24, 26, 28) étant réalisé sous la forme d'un réflecteur optique en métal ou possédant au moins un revêtement métallique, la caractéristique de rayonnement étant définie en interaction avec l'élément de déviation de lumière (22, 24, 26, 28), moyennant quoi un chevauchement du cône lumineux et du signal radioélectrique est sensiblement réalisé, l'unité d'émission (14) étant disposée au niveau du dispositif d'éclairage en étant montée coulissante au moyen d'un arrangement d'ajustement.

2. Dispositif d'éclairage (10) selon la revendication 1, **caractérisé en ce que** le dispositif d'éclairage est configuré pour un montage au plafond, l'unité d'émission dans son ensemble ou au moins l'élément d'antenne actif pour le rayonnement du signal d'identification de position étant disposé dans une position de montage conforme à sa destination au niveau du point le plus bas.

3. Dispositif d'éclairage (10) selon l'une des revendications précédentes, **caractérisé en ce que** l'unité d'émission (14) ou au moins l'élément d'antenne actif pour le rayonnement du signal d'identification de position (15) est disposé au niveau d'une arête (22, 24) du dispositif d'éclairage, notamment au niveau d'un coin (21, 23, 25) du dispositif d'éclairage.

4. Dispositif d'éclairage (10) selon l'une des revendications précédentes, **caractérisé en ce que** le dispositif d'éclairage possède un boîtier externe (20) en un matériau non conducteur d'électricité, notamment en matière plastique, l'unité d'émission étant disposée à l'intérieur du boîtier externe.

5. Dispositif d'éclairage (10) selon l'une des revendications précédentes, **caractérisé en ce que** l'unité d'émission (14) ou au moins l'élément d'antenne actif pour le rayonnement du signal d'identification de position (15) de l'unité d'émission est disposé dans une position relative prédéfinie par rapport au moyen lumineux (12), notamment directement au niveau du moyen lumineux.

6. Dispositif d'éclairage (10) selon l'une des revendications précédentes, **caractérisé en ce que** l'élément d'antenne actif pour le rayonnement du signal d'identification de position (15) peut être positionné du point de vue d'une direction de rayonnement en référence au dispositif d'éclairage et/ou du point de vue d'u angle d'ouverture d'un cône de rayonnement.

7. Dispositif d'éclairage (10) selon l'une des revendications précédentes, **caractérisé en ce que** l'unité d'émission (14) comporte une unité de traitement de données destinée à la mise à disposition des données de détermination de position, l'unité de traitement de données étant disposée séparée spatialement de l'élément d'antenne.

8. Dispositif d'éclairage (10) selon l'une des revendications précédentes, **caractérisé en ce que** le dispositif d'éclairage possède un module de commande électronique (18) pour le moyen lumineux (12), le module de commande électronique étant connecté entre une borne d'alimentation électrique (11) du dispositif d'éclairage et le moyen lumineux.

9. Dispositif d'éclairage (10) selon la revendication 8, **caractérisé en ce que** le module de commande électronique (18) possède un boîtier en un matériau non conducteur d'électricité, notamment en matière plastique, l'unité d'émission (14) étant disposée à l'intérieur du boîtier du module de commande électronique.

10. Dispositif d'éclairage (10) selon la revendication 8 ou 9, **caractérisé en ce que** l'unité d'émission (14) est connectée au module de commande électronique (18) pour sa propre alimentation électrique.

11. Équipement d'éclairage (100) destiné à mettre à disposition des données de détermination de position, comprenant une pluralité de dispositifs d'éclairage (10) selon l'une des revendications précédentes, les dispositifs d'éclairage étant disposés selon un schéma d'installation pouvant être prédéfini pour le fonctionnement conforme à leur destination, la puissance d'émission des signaux d'identification de position respectivement rayonnés et/ou la caractéristique de rayonnement respective étant réglable en fonction d'une hauteur d'installation.

12. Équipement d'éclairage (100) selon la revendication 11, **caractérisé en ce que** l'équipement d'éclairage est configuré de telle sorte qu'au moins deux signaux d'identification de position provenant respectivement de deux dispositifs d'éclairage (10) différents de la pluralité de dispositifs d'éclairage peuvent être reçus au moins à l'intérieur de 95 pour cent d'une surface éclairée par l'équipement d'éclairage et/ou au moins trois signaux d'identification de position provenant respectivement de trois dispositifs d'éclairage différents de la pluralité de dispositifs d'éclairage peuvent être reçus au moins à l'intérieur de 80 pour cent d'une surface éclairée par l'équipement d'éclairage.

13. Procédé pour faire fonctionner un dispositif d'éclairage (10) comprenant un moyen lumineux (12) et une unité d'émission (14), le procédé comprenant l'émission directive d'un signal d'identification de position (15) sous la forme d'un signal radioélectrique ayant une caractéristique de rayonnement pouvant être prédéfinie, le signal d'identification de position comportant des données de détermination de position concernant une position de l'unité d'émission et/ou du moyen lumineux, **caractérisé en ce que** la partie principale aussi bien du signal d'identification de position (15) rayonné que de la lumière rayonnée par le moyen lumineux (12) est respectivement déviée au moyen d'un élément de déviation de lumière (22, 24, 26, 28) du dispositif d'éclairage (10), l'élément de déviation de lumière (22, 24, 26, 28) étant fourni sous la forme d'un réflecteur en métal ou possédant au moins un revêtement métallique, la caractéristique de rayonnement étant définie en interaction avec l'élément de déviation de lumière (22, 24, 26, 28), moyennant quoi un chevauchement du cône lumineux et du signal radioélectrique est sensiblement réalisé, l'unité d'émission (14) étant disposée au niveau du dispositif d'éclairage en étant montée coulissante au moyen d'un arrangement d'ajustement.
